**Europäisches Patentamt**

**European Patent Office**

**Office européen des brevets**

(19)

(11) Veröffentlichungsnummer: **0 078 424**
**B1**

(12) # EUROPÄISCHE PATENTSCHRIFT

(45) Veröffentlichungstag der Patentschrift:
14.08.85

(51) Int. Cl.⁴: **B 32 B 27/10,** B 31 F 5/00

(21) Anmeldenummer: **82109498.4**

(22) Anmeldetag: **14.10.82**

(54) Schichtstoffplatte und Verfahren zur Kontinuierlichen Herstellung einer Schichtstoffplatte.

(30) Priorität: **30.10.81 DE 3143202**

(43) Veröffentlichungstag der Anmeldung:
**11.05.83 Patentblatt 83/19**

(45) Bekanntmachung des Hinweises auf die Patenterteilung:
**14.08.85 Patentblatt 85/33**

(84) Benannte Vertragsstaaten:
**AT BE CH DE FR GB IT LI NL SE**

(56) Entgegenhaltungen:
**DE - A - 2 624 130**
**DE - A - 2 800 762**
**DE - A - 2 805 399**
**DE - A - 2 923 608**
**DE - C - 2 124 139**

(73) Patentinhaber: **METZELER SCHAUM GMBH,**
**Donaustrasse 51, D-8940 Memmingen (DE)**

(72) Erfinder: **Heitmann, Ulrich, Dr., Gotenstrasse 1,**
**D-8940 Memmingen (DE)**

(74) Vertreter: **Michelis, Theodor, Dipl.-Ing.,**
**Gneisenaustrasse 15, D-8000 München 50 (DE)**

ACTORUM AG

# Beschreibung

Die Erfindung betrifft eine Schichtstoffplatte aus einer oder mehreren Lagen Papier und/oder Faservlies, in die ausgehärtete Harze eingelagert sind, und mindestens einer äusseren Feinschicht aus ausgehärtetem Harz, sowie ein Verfahren zur Herstellung einer solchen Schichtstoffplatte.

Die Herstellung beispielsweise von dekorativen Schichtstoffplatten mit ungesättigtem Polyesterharz ist in der DE-C-21 24 139 beschrieben. Danach werden mehrere Bahnen aus Natronkraftpapier und eine obere Bahn Dekorpapier mit Polyesterharz getränkt, unter Druck zusammengeführt und unter Wärmezufuhr auspolymerisiert, wobei als oberste Schicht auf dem Dekorpapier eine glasklare oder gefärbte Feinschicht aus Polyesterharz aufgebracht ist, die nach der Aushärtung im wesentlichen für die Kratz- und Abriebfestigkeit sowie die chemische Resistenz der fertigen Schichtstoffplatte verantwortlich ist.

Die Härte dieser oberen Feinschicht ist im allgemeinen für normale Beanspruchungen, beispielsweise bei der Verkleidung von Möbeln oder Türen, völlig ausreichend. Allein bei extremen Beanspruchungen, etwa bei einer Verwendung als Arbeitsplatte im Küchenbereich, kann die Gefahr bestehen, dass die glatte Oberfläche schneller Kratzer oder matte Stellen aufweist als weniger beanspruchte senkrechte Flächen.

Zur Erhöhung der Abriebfestigkeit ist es dabei aus der DE-A-28 00 762 bekannt, direkt auf das Dekorpapier eine ultradünne Schicht aus Aluminiumoxyd aufzubringen, die durch mikrokristalline Zellulose gebunden und dann mit einer dünnen Schicht aus Melamin-Formaldehydharz abgedeckt ist. Weiter ist aus der DE-A-29 23 608 bekannt, anstelle von Aluminiumoxyd Tonerde oder Kieselerde zu verwenden.

Durch diesen Zusatz eines abriebfesten Minerals wird zwar die Kratz- und Abriebfestigkeit der Schichtstoffplatte erhöht, jedoch im wesentlichen nur im Bereich des Dekorpapiers selbst und nicht unmittelbar an der Oberfläche der Feinschicht, die in herkömmlicher Weise nur aus dem ausgehärteten Harz besteht.

Demgegenüber liegt der Erfindung die Aufgabe zugrunde, eine abrieb- und kratzfeste Schichtstoffplatte zu schaffen, bei der die gesamte Feinschicht selbst erheblich widerstandsfähiger ausgebildet ist.

Zur Lösung dieser Aufgabe ist erfindungsgemäss vorgesehen, dass die Feinschicht gemahlene und/oder geschnittene Glasfasern enthält.

Der Anteil der Glasfasern in der Feinschicht kann dabei 1-25, vorzugsweise 3-15 und insbesondere 5-10 Gew.-% betragen. Die Länge der Glasfasern sollte dabei 0,1-12 mm, vorzugsweise 0,1-1,0 mm, insbesondere 0,2-0,4 mm, betragen.

Durch diese direkte Untermischung der Glasfasern unter das gesamte Harz der Feinschicht wird erreicht, dass diese Feinschicht bis zu ihrer Oberfläche erheblich abrieb- und kratzfester ist, wie noch später erläutert werden wird.

Bei einem Verfahren zur kontinuierlichen Herstellung von Schichtstoffplatten, bei dem eine oder mehrere Bahnen Papier und/oder Faservlies mit härtbarem Harz imprägniert und zusammengeführt sowie auf eine oder beide Oberflächen als Feinschicht ein härtbares Harz aufgebracht werden, wobei die härtbaren Harze die zur Aushärtung erforderlichen Aktivatoren sowie ggf. Beschleuniger enthalten, und schliesslich die so erhaltene Schichtung zwischen Trennfolien unter Wärmeeinwirkung ausgehärtet wird, ist erfindungsgemäss vorgesehen, dass dem die Feinschicht bildenden Harz gemahlene und/oder geschnittene Glasfasern zugesetzt werden.

Dabei kann das mit Glasfasern versetzte, nicht ausgehärtete Harz auf mindestens eine der Trennfolien aufgetragen und vorgehärtet werden, bevor die Trennfolien mit der oder den imprägnierten Bahnen zusammengeführt werden.

In einer schematischen Zeichnung ist eine Schichtstoffplatte, die nach der Erfindung hergestellt ist, im Längsschnitt zum Zeitpunkt des Aufbringens der Feinschicht näher dargestellt.

Von unten nach oben gesehen weist die Schichtstoffplatte 11 zunächst eine Trennpapierschicht 1 auf, damit die Platte bei der Herstellung gut auf der Unterlage gleitet. Es folgen dann die eigentliche untere Abschlussschicht 2 der Schichtstoffplatte aus Polyesterharz, darauf eine erste Schicht Natronkraftpapier 3 und eine weitere Polyesterschicht 4 als Bindemittel zur nächsten Kraftpapierschicht 5. Die anschliessende Polyesterschicht 6 stellt die Verbindung zum Dekorpapier 7 her. Wie bereits eingangs beschrieben, werden die einzelnen Kraftpapierschichten 3 und 5 sowie das Dekorpapier 7 zunächst getrocknet und mit dem Harz durchdringend getränkt, wobei im allgemeinen vor dem Zusammenführen der einzelnen Bahnen auf diese noch eine gesonderte Schicht Polyesterharz aufgetragen wird. Im Rahmen der Erfindung ist es dabei aber auch möglich, statt des Polyesterharzes Epoxydharze zur Verbindung und Aushärtung zu verwenden.

Auf das oberste Dekorpapier, das entweder einfarbig oder gemustert bedruckt sein kann, wird dann die abschliessende Feinschicht aus aushärtbarem Harz aufgebracht, die die eigentliche Oberfläche der Platte bildet.

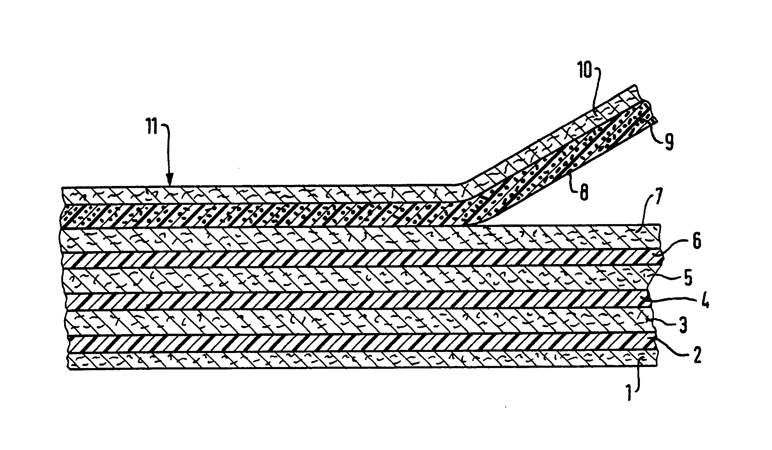

In diese Feinschicht, die im allgemeinen eine Stärke von etwa 20-200 µm, insbesondere 50-100 µm, aufweist, werden nun erfindungsgemäss gemahlene und/oder geschnittene Glasfasern von einer Länge von 0,1-12 mm, vorzugsweise 0,1-1,0 mm und insbesondere 0,2-0,4 mm, dem Harz der Feinschicht gleichmässig untergemischt, so dass sie das Harz vollständig durchsetzen. Dabei ist es zweckmässig, wenn das mit Glasfasern versetzte, noch nicht ausgehärtete Feinschichtharz zunächst auf das obere Trennpapier 10 nach der Zeichnung oder auf eine Trennfolie in der gewünschten Dicke aufgetragen und entsprechend vorgehärtet wird. Nach dieser Vorhärtung wird das Trennpapier 10 mit der Feinschicht 8 und den darin enthaltenen Glasfaserteilchen 9 auf das Dekorpapier 7 aufgebracht, unter Druck verbunden und anschliessend unter Wärme ausgehärtet. Nach dem Aushärten und Abkühlen der fertigen Platte werden das untere und das obere Trennpapier 1 und 10 abgezogen und die Schichtstoffplatte aufgerollt oder entsprechend abgelängt.

Wenn die Schichtstoffplatte ober- und unterseitig eine kratz- und abriebfeste Feinschicht aufweisen soll, kann in gleicher Weise wie für die obere Feinschicht 9 auf das untere Trennpapier 1 die Harzschicht 2 als mit Glasfasern versetzte Feinschicht aufgetragen, vorgehärtet und anschliessend auf die Papierbahn aufgepresst werden.

Dadurch, dass die Glasfasern über die gesamte Höhe der Feinschicht gleichmässig verteilt sind, ist auch die Feinschicht an ihrer Oberfläche selbst erheblich abrieb- und kratzfester als eine herkömmliche Feinschicht nur aus dem gehärteten Harz. Vergleichsversuche nach DIN 53799 haben für die Kratzfestigkeit bei einer herkömmlichen Feinschicht einen Wert von 1-3 N und bei einer Feinschicht mit den erfindungsgemässen Glasfasern einen Wert von 3-5 N ergeben, während für den Abrieb ohne Glasfasern 120-140 mg/100 Umd. und für eine Feinschicht mit Glasfasern 70-90 mg/100 Umd. ermittelt wurden.

Darüber hinaus konnte festgestellt werden, dass durch den Zusatz an Glasfasern weder die visuelle Klarheit des Musters auf dem Dekorpapier noch überraschenderweise die Chemikalienbeständigkeit der Feinschicht verringert wird.

## Patentansprüche

1. Schichtstoffplatte aus einer oder meheren Lagen Papier und/oder Faservlies, in die ausgehärtete Harze eingelagert sind, und mindestens einer äusseren Feinschicht aus ausgehärtetem Harz, dadurch gekennzeichnet, dass die Feinschicht gemahlene und/oder geschnittene Glasfasern enthält.

2. Schichtstoffplatte nach Anspruch 1, dadurch gekennzeichnet, dass die Länge der Glasfasern 0,1-12 mm, vorzugsweise 0,1-1,0 mm, insbesondere 0,2-0,4 mm, beträgt.

3. Schichtstoffplatte nach Ansprüchen 1 und 2, dadurch gekennzeichnet, dass der Anteil der Glasfasern in der Feinschicht 1-25 Gew.-%, vorzugsweise 3-15 Gew.-%, insbesondere 5-10 Gew.-%, beträgt.

4. Schichtstoffplatte nach Ansprüchen 1-3, dadurch gekennzeichnet, dass die Feinschicht eine Dicke von 20-200 μm, insbesondere 50-100 μm, aufweist.

5. Schichtstoffplatte nach Ansprüchen 1-4, dadurch gekennzeichnet, dass das ausgehärtete Harz aus ausgehärtetem, ungesättigtem Polyesterharz und/oder Epoxydharz besteht.

6. Verfahren zur kontinuierlichen Herstellung von Schichtstoffplatten, bei dem eine oder mehrere Bahnen Papier und/oder Faservlies mit härtbarem Harz imprägniert und zusammengeführt sowie auf eine oder beide Oberflächen als Feinschicht ein härtbares Harz aufgebracht werden, wobei die härtbaren Harze die zur Aushärtung erforderlichen Aktivatoren sowie ggf. Beschleuniger enthalten, und schliesslich die so erhaltene Schichtung zwischen Trennfolien unter Wärmeeinwirkung ausgehärtet wird, dadurch gekennzeichnet, dass dem die Feinschicht bildenden Harz gemahlene und/oder geschnittene Glasfasern zugesetzt werden.

7. Verfahren nach Anspruch 6, dadurch gekennzeichnet, dass das mit Glasfasern versetzte, nicht ausgehärtete Harz auf mindestens eine der Trennfolien aufgetragen und vorgehärtet wird, bevor die Trennfolien mit der oder den imprägnierten Bahnen zusammengeführt werden.

8. Verfahren nach Anspruch 6 oder 7, dadurch gekennzeichnet, dass Glasfasern mit einer Länge von 0,1-12 mm, vorzugsweise 0,1-1,0 mm, insbesondere 0,2-0,4 mm, verwendet werden.

9. Verfahren nach Ansprüchen 6-8, dadurch gekennzeichnet, dass dem Harz der Feinschicht 1-25 Gew.-%, vorzugsweise 3-15 Gew.-%, insbesondere 5-10 Gew.-% Glasfasern zugemischt werden.

10. Verfahren nach Ansprüchen 6-9, dadurch gekennzeichnet, dass die Feinschicht in einer ausgehärteten Dicke von 20-200 μm, insbesondere 50-100 μm, aufgetragen wird.

11. Verfahren nach Ansprüchen 6-10, dadurch gekennzeichnet, dass als aushärtendes Harz ungesättigtes Polyesterharz und/oder Epoxydharz verwendet wird.

## Claims

1. Laminated plastic panel consisting of one or several layers of paper and/or non-woven fabric, in which hardened resins are intercalated, and at least one outer fine layer of hardened resin, characterized in that the fine layer contains ground and/or cut glass fibres.

2. Laminated plastic panel according to claim 1, characterized in that the length of the glass fibres is from 0.1 to 12 mm, preferably from 0.1 to 1.0 mm, particularly from 0.2 to 0.4 mm.

3. Laminated plastic panel according to claims 1 and 2, characterized in that the proportion of glass fibres in the fine layer is from 1 to 25% by weight, preferably from 3 to 15% by weight, particularly from 5 to 10% by weight.

4. Laminated plastic panel according to claims 1 to 3, characterized in that the fine layer has a thickness of from 20 to 200 μm, particularly from 50 to 100 μm.

5. Laminated plastic panel according to claims 1 to 4, characterized in that the hardened resin consists of hardened, unsaturated polyester resin and/or epoxide resin.

6. A process for the continuous production of laminated plastic panels, in which one or several widths of paper and/or non-woven fabric are impregnated with hardenable resin and are brought together and a hardenable resin is applied on one or both surfaces as fine layer, the hardenable resins containing the activators as well as optionally accelerators necessary for hardening, and finally the layer thus obtained between separating films is hardened by the effect of heat, characterized in that ground and/or cut glass fibres are added to the resin forming the fine layer.

7. A process according to claim 6, characterized in that the non-hardened resin treated with glass fibres is applied to at least one of the separating films and prehardened before the separating film is brought together with the impregnated layer(s).

8. A process according to claim 6 or 7, characterized in that glass fibres with a length of from 0.1 to 12 mm, preferably from 0.1 to 1.0 mm, particularly from 0.2 to 0.4 mm are used.

9. A process according to claims 6 to 8, characterized in that from 1 to 25% by weight, preferably from 3 to 15% by weight, particularly from 5 to 10% by weight of glass fibres are mixed with the resin of the fine layer.

10. A process according to claims 6 to 9, characterized in that the fine layer is applied in a hardened thickness of from 20 to 200 µm, particularly from 50 to 100 µm.

11. A process according to claims 6 to 10, characterized in that unsaturated polyester resin and/or epoxide resin is used as hardening resin.

**Revendications**

1. Plaque stratifiée formée d'une ou de plusieurs couches de papier et/ou de voile de fibres, dans lesquelles sont incorporées des résines durcies, et d'au moins une couche extérieure de finition en résine durcie, caractérisée en ce que la couche de finition contient des fibres de verre broyées et/ou coupées.

2. Plaque selon la revendication 1, caractérisée en ce que les fibres de verre ont une longueur de 0,1-12 mm, de préférence de 0,1-1,0 mm et en particulier de 0,2-0,4 mm.

3. Plaque selon les revendications 1 et 2, caractérisée en ce que la proportion de fibres de verre dans la couche de finition est de 1-25% en poids, de préférence de 3-15% et en particulier de 5-10% en poids.

4. Plaque selon les revendications 1-3, caractérisée en ce que la couche de finition possède une épaisseur de 20-200 µm, en particulier de 50-100 µm.

5. Plaque selon les revendications 1-4, caractérisée en ce que la résine durcie est une résine polyester insaturée et/ou une résine époxy insaturée.

6. Procédé pour fabriquer en continu des plaques stratifiées, selon lequel on imprègne une ou plusieurs bandes de papier et/ou de voile de fibres avec de la résine durcissable, on amène les couches ensemble pour les réunir et on applique une résine durcissable en tant que couche de finition sur l'une ou sur les deux faces externes des couches réunies, les résines durcissables contenant les activateurs nécessaires au durcissement et éventuellement des accélérateurs, et selon lequel on fait enfin durcir l'empilage de couches ainsi obtenu sous l'action de la chaleur entre des films de séparation, caractérisé en ce que l'on ajoute des fibres de verre broyées et/ou coupées à la résine formant la couche de finition.

7. Procédé selon la revendication 6, caractérisé en ce que l'on applique la résine mélangée avec les fibres de verre avant son durcissement sur au moins l'un des films de séparation et on la soumet à un durcissement préalable avant de réunir les films de séparation avec la bande ou les bandes imprégnée(s).

8. Procédé selon la revendication 6 ou 7, caractérisé en ce que l'on utilise des fibres de verre d'une longueur de 0,1-12 mm, de préférence de 0,1-1,0 mm, en particulier de 0,2-0,4 mm.

9. Procédé selon les revendications 6-8, caractérisé en ce que l'on ajoute en mélange 1-25% en poids, de préférence 3-15% en poids et en particulier de 5-10% en poids de fibres de verre à la résine de la couche de finition.

10. Procédé selon les revendications 6-9, caractérisé en ce que la couche de finition est appliquée sous une épaisseur, à l'état durci, de 20-200 µm, en particulier de 50-100 µm.

11. Procédé selon les revendications 6-10, caractérisé en ce que la résine durcie est une résine polyester insaturée et/ou une résine époxy insaturée.